(19) Europäisches Patentamt / European Patent Office / Office européen des brevets

(11) **EP 4 248 682 B1**

(12) **FASCICULE DE BREVET EUROPEEN**

(45) Date de publication et mention
de la délivrance du brevet:
**04.09.2024   Bulletin 2024/36**

(21) Numéro de dépôt: **21815439.1**

(22) Date de dépôt: **17.11.2021**

(51) Classification Internationale des Brevets (IPC):
*H04W 36/32* $^{(2009.01)}$   *H04W 36/00* $^{(2009.01)}$
*H04W 36/36* $^{(2009.01)}$   *H04W 88/04* $^{(2009.01)}$

(52) Classification Coopérative des Brevets (CPC):
**H04W 36/00835;** H04W 36/324; H04W 36/36

(86) Numéro de dépôt international:
**PCT/EP2021/081935**

(87) Numéro de publication internationale:
**WO 2022/106445 (27.05.2022 Gazette 2022/21)**

(54) **METHODE D'OPTIMISATION DU TRANSFERT INTERCELLULAIRE DANS UN RESEAU MOBILE ET SYSTEME ASSOCIE**

VERFAHREN UND SYSTEM ZUR OPTIMIERUNG VON HANDOVERS IN EINEM MOBILFUNKNETZ

METHOD AND SYSTEM FOR THE OPTIMISATION OF HANDOVERS IN A MOBILE NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **18.11.2020   FR 2011835**

(43) Date de publication de la demande:
**27.09.2023   Bulletin 2023/39**

(73) Titulaires:
• **Airbus DS SLC**
  **78990 Elancourt (FR)**
• **Airbus Defence and Space SAU**
  **28022 Madrid (ES)**

(72) Inventeurs:
• **PONS MASBERNAT, Xavier**
  **78180 Montigny le Bretonneux (FR)**
• **GEORGEAUX, Eric**
  **78180 Montigny-le-Bretonneux (FR)**
• **SCHIEL, Jean-Christophe**
  **78310 Coignières (FR)**
• **GOMEZ CALERO, Carlos**
  **28906 Getafe (ES)**

(74) Mandataire: **Cabinet Camus Lebkiri**
  **25 rue de Maubeuge**
  **75009 Paris (FR)**

(56) Documents cités:
EP-A1- 3 110 203      EP-A1- 3 709 709
US-A1- 2018 233 055   US-A1- 2019 306 768

**Description**

**DOMAINE TECHNIQUE DE L'INVENTION**

Le domaine technique de l'invention est celui des communications au sein de réseaux mobiles.

La présente invention concerne une méthode d'optimisation du transfert intercellulaire dans un réseau mobile et un système associé et en particulier une méthode mise en oeuvre par un équipement utilisateur, l'équipement utilisateur modifiant les rapports de mesure de signal qu'il émet à la station de base à laquelle il est rattaché pour restreindre la sélection de cellules et limiter les transferts intercellulaires.

**ARRIERE-PLAN TECHNOLOGIQUE DE L'INVENTION**

Dans les communications au sein de réseaux mobiles tels que des réseaux de quatrième (« 4G ») et cinquième génération (« 5G »), des équipements utilisateurs (aussi appelés « UE » selon la dénomination anglo-saxonne pour « User Equipment ») sont rattachés à des stations de base (aussi appelées « BS » selon la dénomination anglo-saxonne pour « Base Station »). Une station de base couvre une zone géographique appelée « cellule ». Les équipements utilisateurs étant mobiles, ils sont amenés à changer de cellule et donc de station de base de rattachement. Ces changements de station de base de rattachement sont aussi appelés transferts intercellulaires ou « handover » selon la dénomination anglo-saxonne.

Les demandes de Brevet EP3110203A1 et US2019/306768A1 fournissent des enseignements complémentaires sur le contexte de la présente demande. 11

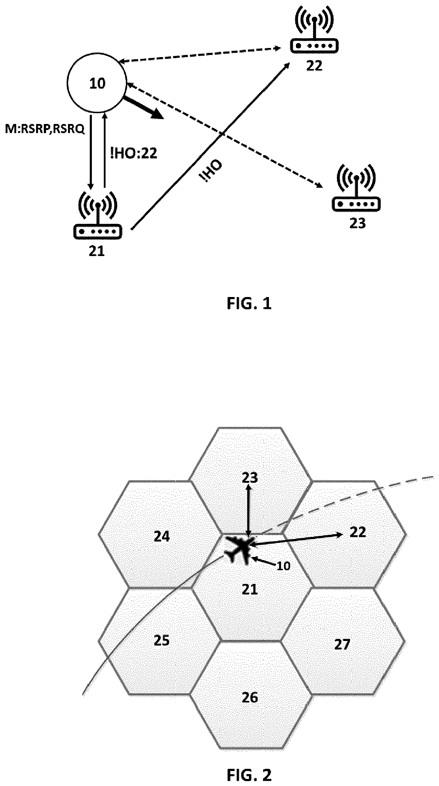

Dans les réseaux cellulaires, par exemple ceux définis par le projet de partenariat 3GPP (« 3rd Génération Partnership Project ») et notamment 4G LTE (selon la dénomination anglo-saxonne pour « Long Term Evolution », en français « Evolution Long-Terme ») ou 5G NR (selon la dénomination anglo-saxonne pour « New Radio », en français Nouvelle Radio), ces transferts intercellulaires sont réalisés de la façon décrite à la Figure 1.

La Figure 1 montre une représentation schématique d'un transfert intercellulaire connu dans un réseau cellulaire.

Le système représenté à la Figure 1 comprend un équipement utilisateur 10 et trois stations de base 21 à 23, chacune formant une cellule du réseau cellulaire. L'équipement utilisateur 10 se dirige par exemple dans une direction de déplacement selon la flèche épaisse (vers la station de base 23). Pour ses communications au sein du réseau, l'équipement utilisateur 10 est rattaché à la station de base 21, ce rattachement étant représenté par un trait plein. Dans le procédé mis en place par le 3GPP, la décision de transfert intercellulaire est prise par la station de base de rattachement 21. C'est donc la station de base 21 qui va décider si un transfert intercellulaire de l'équipement utilisateur 10 vers une des stations de base 22 ou 23 doit avoir lieu. Cette décision est prise par la station de base de rattachement 21 en fonction de mesures réalisées par l'équipement utilisateur 10 et transmises à la station de base de rattachement 21.

Chaque station de base 21 à 23 émet périodiquement des signaux de référence RS (pour « reference signal » selon la dénomination anglo-saxonne). Ces signaux, connus de l'équipement utilisateur 10, sont reçus par ce dernier. L'équipement utilisateur 10 mesure alors, pour chaque signal de référence qu'il reçoit, la RSRP (« Reference Signal Received Power » pour « Puissance Reçue du Signal de Référence » en français) et la RSRQ (« Reference Signal Received Quality » pour « Qualité Reçue du Signal de Référence » en français). La RSRP est exprimée en Watt ou en dBm (decibel-milliwatts). La RSRQ est définie comme étant le rapport du RSRP sur le RSSI (« Received Signal Strength Indicator » pour « Indication de Force du Signal Reçu ») et est exprimée en dB (decibels).

Ces mesures sont transmises périodiquement à la station de base de rattachement 21 ou en fonction d'un évènement spécifique prédéterminé par la station de base de rattachement 21 dans une communication « M:RSRP,RSRQ » représentée à la Figure 1. La station de base de rattachement 21 reçoit donc l'ensemble des mesures réalisées pour l'ensemble des signaux reçus par l'équipement utilisateur 10, c'est-à-dire pour l'ensemble des stations de base accessibles par l'équipement utilisateur 10 pendant un période donnée. Avec ces informations, la station de base de rattachement 21 compare la RSRQ ou la RSRP mesurée par l'équipement utilisateur 10 du signal qu'elle a elle-même émis avec la RSRQ ou la RSRP mesurée par l'équipement utilisateur 10 pour les autres stations de base 22 et 23 et décide quand et comment réaliser un transfert intercellulaire de l'équipement utilisateur 10 vers une autre station de base de rattachement 22 ou 23. Par exemple, à la Figure 1, la station de base de rattachement 21 peut décider de réaliser un transfert intercellulaire de l'équipement utilisateur 10 vers la cellule formée par la station de base 22, car les mesures donnent des valeurs plus élevées. Une fois cette décision prise, la station de base de rattachement 21 en informe la station de base de rattachement choisie (par exemple 22) dans une communication « !HO » pour que la station de base 22 puisse préparer les ressources nécessaires au transfert intercellulaire puis informe l'équipement utilisateur 10 dans une communication « !HO:22 » de ce changement de station de base de rattachement.

Lorsque l'équipement utilisateur 10 est en mouvement, des transferts intercellulaires peuvent intervenir très souvent. Par exemple, l'équipement utilisateur 10 peut être un avion. Un avion comprenant une pluralité d'antennes directives pointant dans différentes directions peut atteindre une vitesse au sol de 1200 kilomètres par heure. Chaque station de base 21 à 23 ayant par exemple une portée de 30 kilomètres, la durée moyenne maximale pendant laquelle un avion est rattaché à une station de base n'est alors que de 90 secondes. Comme il n'y a pas d'obstacles entre la station de base et l'équipement utilisateur 10, une situation de visibilité directe peut être envisagée ainsi qu'un canal de propagation en espace libre. À ces vitesses et dans des conditions de propagation en espace libre entre l'équipement utilisateur (l'avion) et toutes les stations de base au sol, une grande partie des stations de base 21 à 23 est mesurée par l'équipement utilisateur, potentiellement beaucoup plus qu'avec un équipement utilisateur classique situé au sol, et potentiellement avec des forces de signaux très similaires. Toutes ces mesures sont rapportées selon le mécanisme standard décrit précédemment et à la Figure 1. Cependant, les mesures des cellules voisines auront des valeurs de RSRP et de RSRQ très proches en raison des conditions de propagation en visibilité directe. De tels rapports à la station de base de service peuvent entraîner une sélection de cellules non optimale pour les transferts intercellulaires, avec pour conséquence un nombre accru de transferts.

Un nombre important de transferts intercellulaires a un impact sur le débit de l'équipement utilisateur (l'avion) puisqu'une coupure de 20 à 30 ms se produit à chaque fois qu'un transfert est effectué. Ceci est dû à la nature du transfert dans les réseaux 4G ou 5G, qui est un transfert dit « hard » (« difficile » en français) aussi appelé « break-before-make » (pour « rompre avant de faire » en français). Ainsi, sont ajoutées des coupures de connexion et des signaux supplémentaires nécessaires pour suivre toutes les procédures de transfert, ce qui a pour conséquence une baisse considérable du débit et de la latence.

En outre, les mesures peuvent être biaisées à cause de l'attitude de l'équipement utilisateur, et notamment à cause de l'orientation des antennes directionnelles à bord. L'équipement utilisateur doit alors corriger les mesures brutes selon son attitude connue, en particulier selon le roulis et le tangage de l'avion lorsque l'équipement utilisateur est un avion ou est compris dans un avion.

Ainsi, étant donné que de nombreuses stations de base peuvent être mesurées par l'équipement utilisateur avec des mesures ayant des valeurs très proches en raison des spécificités de l'application à un dispositif mobile volant, il existe un besoin d'avoir une méthode permettant de meilleurs débit et latence que l'état de l'art, tout en ayant une sélection pertinente des stations de base de rattachement.

## RESUME DE L'INVENTION

L'invention telle que définie par les revendications indépendantes ci-jointes, offre une solution aux problèmes évoqués précédemment, en permettant à la station de base de rattachement de ne choisir que des stations de base pertinentes grâce à une pré-sélection des stations de base par l'équipement utilisateur.

Un aspect de l'invention concerne une méthode de pré-sélection d'au moins une station de base parmi une pluralité de stations de base, un équipement utilisateur et la pluralité de stations de base étant compris dans un réseau mobile, l'équipement utilisateur étant attaché à une station de base de rattachement de la pluralité de stations de base, chaque station de base formant une cellule du réseau mobile, la méthode comprenant les étapes de :

- Réception, par l'équipement utilisateur, d'un signal de chaque station de base de la pluralité de stations de base,
- Mesure, par l'équipement utilisateur, d'au moins une caractéristique de chaque signal reçu de la pluralité de stations de base, la mesure comprenant l'attribution d'au moins une valeur associée à chaque station de base en fonction de la au moins une caractéristique de chaque signal et la création d'un rapport comprenant l'ensemble des valeurs attribuées,
- Pré-sélection d'au moins une station de base parmi la pluralité de stations de base en fonction d'au moins un critère relatif à l'équipement utilisateur et de la mesure réalisée à l'étape de mesure,
- Modification d'au moins une valeur du rapport créé à l'étape de mesure, la au moins une valeur modifiée étant associée à la au moins une station de base présélectionnée.

Grâce à l'invention, l'équipement utilisateur présélectionne un groupe de stations de base ou au moins une station de base en fonction de critères relatifs à des informations sur l'équipement utilisateur, permettant de « délocaliser » une partie de l'intelligence et des capacités décisionnelles de la station de base de rattachement vers l'équipement utilisateur. Ainsi, on limite les échanges entre l'équipement utilisateur et la station de base de rattachement et on limite le nombre de transferts intercellulaires intempestifs en promouvant auprès de la station de base de rattachement des stations de base plus appropriées que la station de base de rattachement.

On considère une station de base comme « pertinente » ou « appropriée » lorsqu'elle possède un réel atout par rapport à la station de base de rattachement actuelle, c'est-à-dire lorsqu'elle permet de meilleures communications tout en s'assurant que changer de station de base de rattachement pour cette nouvelle station de base n'a pas un coût en débit et en latence trop important par rapport au gain. Ainsi, l'invention permet de « promouvoir » certaines stations de base auprès de la station de base de rattachement et d'en « handicaper » d'autres, afin de s'assurer que certaines stations de base qui seraient, en temps normal, sélectionnées, ne le soient pas car le gain d'un transfert intercellulaire vers celles-ci n'est pas assez important au regard du coût en débit et en latence qu'il engendrerait.

Par exemple, les valeurs de mesures concernant des signaux de cellules voisines qui sont fortement reçus par l'antenne pointant vers l'avant d'un équipement utilisateur en déplacement peuvent être modifiées pour être plus "attractives" afin que le réseau augmente la probabilité de déclencher un transfert intercellulaire vers ces cellules.

Au contraire, les cellules qui sont identifiées comme étant sur le côté de la trajectoire de l'avion peuvent être rendues "moins attrayantes" dans les rapports de mesures afin qu'elles soient des candidats de faible priorité pour un transfert intercellulaire.

On entend par « présélectionner » au moins une station de base le fait de déterminer au moins une station de base à « promouvoir » ou « favoriser » ou à « handicaper » ou « défavoriser ». Une présélection peut comprendre la promotion d'une seule ou de plusieurs stations de base, le handicap d'une seule ou de plusieurs stations de base, ou une combinaison de la promotion d'au moins une station de base et du handicap d'au moins une autre station. On considérera par la suite qu'une station de base est promue ou est handicapée par rapport aux autres stations de base non promues et non handicapées lors de la sélection réalisée par la station de base de rattachement mettant en oeuvre la méthode connue car définie par exemple par le 3GPP de sélection d'une station de base pour un transfert intercellulaire.

Outre les caractéristiques qui viennent d'être évoquées dans le paragraphe précédent, la méthode de présélection selon un aspect de l'invention peut présenter une ou plusieurs caractéristiques complémentaires parmi les suivantes, considérées individuellement ou selon toutes les combinaisons techniquement possibles :

- à l'étape de modification d'au moins une valeur du rapport, la au moins une valeur est modifiée par l'ajout ou la soustraction d'une valeur prédéterminée.

- la valeur prédéterminée est ajoutée ou soustraite à la au moins une valeur du rapport si la station de base associée à la valeur appartient à la au moins une station de base présélectionnée.

- le au moins un critère relatif à l'équipement utilisateur prend en compte au moins une des informations sur l'équipement utilisateur parmi :

    - l'attitude de l'équipement utilisateur,

    - la vitesse de l'équipement utilisateur,

    - l'altitude de l'équipement utilisateur,

    - au moins une information concernant une pluralité d'antennes de l'équipement utilisateur,

- la valeur prédéterminée est prédéterminée en fonction de la au moins une information prise en compte,

- le au moins un critère est choisi parmi :

    - la direction de la cellule de chaque station de base, déterminée à partir de la disposition des antennes de l'équipement utilisateur et de la valeur de la caractéristique mesurée de chaque signal reçu,

    - la valeur du décalage Doppler du signal reçu de chaque station de base,

    - l'évolution de la puissance reçue,

    - un niveau de confiance de l'équipement utilisateur déterminée à partir de l'attitude, de la vitesse et/ou de l'altitude de l'équipement utilisateur,

- les étapes de pré-sélection et de modification sont mises en oeuvre par l'équipement utilisateur et la méthode de pré-sélection comprend en outre une étape d'envoi du rapport à la station de base de rattachement,

- les étapes de pré-sélection et de modification sont mises en oeuvre par la station de base de rattachement et la méthode de pré-sélection comprend en outre, avant les étapes de pré-sélection et de modification, une étape de réception, par la station de base de rattachement, du rapport.

- la méthode de pré-sélection comprend en outre, avant les étapes de pré-sélection et de modification, une étape de réception, par la station de base de rattachement, d'au moins une des informations sur l'équipement utilisateur.

Un autre aspect de l'invention concerne une méthode d'optimisation du transfert intercellulaire dans un réseau mobile comprenant une pluralité de stations de base et au moins un équipement utilisateur, chaque station de base formant une cellule du réseau mobile, l'équipement utilisateur étant rattaché à une station de base de rattachement de la pluralité de stations de base, une décision de transfert intercellulaire étant prise par la station de base de rattachement en fonction de mesures réalisées par l'équipement utilisateur, la méthode d'optimisation étant caractérisée en ce qu'elle comprend la méthode de pré-sélection de stations de base selon l'invention mise en oeuvre par l'équipement utilisateur et au moins les étapes de

- Réception du rapport par la station de base de rattachement,

- Sélection d'une station de base parmi la pluralité de stations de base à partir du rapport reçu par la station de base de rattachement,

- Initiation du transfert intercellulaire par la station de base de rattachement.

Un autre aspect de l'invention concerne un système comprenant :

- Au moins un équipement utilisateur configuré pour mettre en oeuvre la méthode de pré-sélection selon l'invention,

- Une pluralité de stations de bases comprenant au moins une station de base de rattachement à laquelle l'équipement utilisateur est rattaché, la station de base de rattachement étant configurée pour mettre en oeuvre la méthode d'optimisation de transfert intercellulaire selon l'invention.

Un autre aspect de l'invention concerne un système comprenant :

- Au moins un équipement utilisateur,

- Une pluralité de stations de bases comprenant au moins une station de base de rattachement à laquelle l'équipement utilisateur est rattaché, la station de base de rattachement étant configurée pour mettre en oeuvre la méthode de pré-sélection selon l'invention.

Dans un mode de réalisation, l'équipement utilisateur du système selon un aspect de l'invention est un aéronef.
Encore un autre aspect de l'invention concerne un produit-programme d'ordinateur comprenant des instructions qui, lorsque le programme est exécuté par un ordinateur, conduisent celui-ci à mettre en oeuvre les étapes d'une des méthodes de présélection selon l'invention ou d'optimisation du transfert intercellulaire selon l'invention.
Encore un autre aspect de l'invention concerne un support d'enregistrement lisible par ordinateur comprenant des instructions qui, lorsqu'elles sont exécutées par un ordinateur, conduisent celui-ci à mettre en oeuvre les étapes d'une des méthodes de présélection selon l'invention ou d'optimisation du transfert intercellulaire selon l'invention.
L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

- La figure 1 montre une représentation schématique d'un transfert intercellulaire selon l'état de la technique,

- La figure 2 montre une représentation schématique d'un aéronef recevant des signaux de plusieurs stations de base,

- La figure 3 montre une représentation schématique d'une méthode d'optimisation de transfert intercellulaire selon un aspect de l'invention,

- La figure 4 montre une représentation schématique d'une méthode de présélection de stations de base selon un autre aspect de l'invention,

- La figure 5 montre un système mettant en oeuvre les méthodes selon l'invention,

- La figure 6 montre une représentation schématique d'une méthode de présélection de stations de base selon un autre mode de réalisation de l'invention.

## DESCRIPTION DETAILLEE

Les figures sont présentées à titre indicatif et nullement limitatif de l'invention.

Sauf précision contraire, un même élément apparaissant sur des figures différentes présente une référence unique.

La figure 2 montre une représentation schématique d'un aéronef recevant des signaux de plusieurs stations de base.

Bien que la Figure 2 représente un aéronef 10, l'invention s'applique à tout dispositif capable d'agir en tant qu'équipement utilisateur 10, c'est-à-dire tout dispositif comprenant les moyens pour échanger au sein du réseau mobile. L'invention s'applique à tout réseau mobile de type « cellulaire », c'est-à-dire dont les stations de base forment des cellules. Par la suite, on pourra faire référence de manière interchangeable à une « cellule » ou à une « station de base », une station de base formant une cellule du réseau. De tels réseaux mobiles peuvent être, sans se limiter à ces réseaux, des réseaux 4G LTE ou 5G NR. L'invention s'applique à tous les réseaux mobile cellulaires dans lesquels un équipement utilisateur 10 est rattaché à une station de base 21, et dans lesquels un transfert intercellulaire est possible, la décision de transfert intercellulaire revenant à la station de base de rattachement 21 de l'équipement utilisateur 10.

Selon un fonctionnement classique connu, l'aéronef 10 représenté à la Figure 2, par exemple un avion, rattaché à la station de base 21, se verra transféré vers la station de base 23 par un transfert intercellulaire, les mesures (par exemple de RSRP et/ou RSRQ) liées à la cellule formée par la station de base 23 étant meilleures que les mesures liées à la cellule formée par la station de base 22 par exemple par sa plus grande proximité avec l'aéronef. Selon ce fonctionnement classique connu, à mesure que l'aéronef 10 avancera, les mesures liées à la cellule formée par la station de base 22 deviendront meilleures que les mesures liées à la cellule formée par la station de base 23. Ainsi, ce fonctionnement classique connu aura réalisé deux transferts intercellulaires : de la station de base 21 vers la station de base 23, puis de la station de base 23 vers la station de base 22.

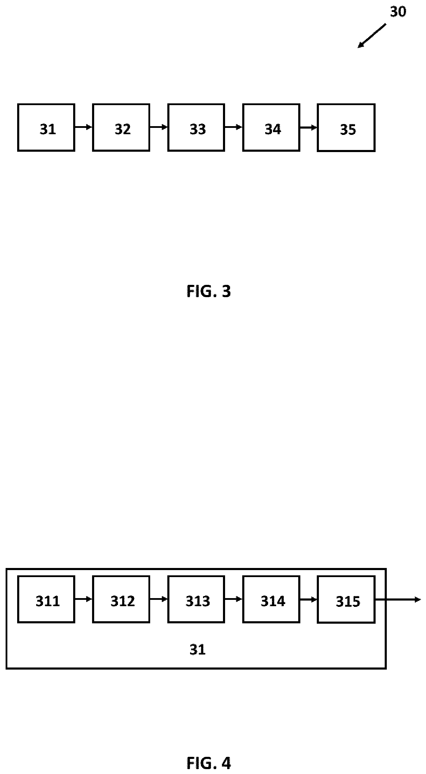

Au contraire, l'invention prend en compte plusieurs paramètres et informations de l'équipement utilisateur 10 pour limiter le nombre de transferts intercellulaires et pour que les transferts intercellulaires soient de meilleure qualité. Pour cela, le système comprenant la station de base de rattachement 21 et l'équipement utilisateur 10 met en oeuvre la méthode 30 représentée à la Figure 3.

La Figure 3 montre une représentation schématique d'une méthode d'optimisation de transfert intercellulaire selon un aspect de l'invention.

La méthode d'optimisation du transfert intercellulaire 30 comprend au moins les cinq étapes 31 à 35 représentées à la figure 3.

La méthode d'optimisation du transfert intercellulaire 30 comprend une première étape de présélection 31 de stations de base mise en oeuvre par l'équipement utilisateur 10.

Pour mettre en oeuvre une étape d'une méthode, un dispositif comprend un processeur et une mémoire, la mémoire stockant des instructions, qui, lorsqu'elles sont exécutées par le processeur, conduisent le processeur à la mise en oeuvre de l'étape.

L'étape de présélection 31 est décrite plus en détail à la Figure 4. L'étape de pré-sélection permet de présélectionner des stations de base candidates à un transfert intercellulaire, et de « promouvoir » ou « handicaper » ces stations de base présélectionnées auprès de la station de base de rattachement 21. On parle de « présélection » par l'équipement utilisateur 10 car la station de base de rattachement 21 sélectionne par la suite, s'il y a lieu, une station de base pour le transfert intercellulaire. La station de base de rattachement 21 est une station de base du réseau au travers de laquelle l'équipement utilisateur 10 communique avec le reste du réseau, notamment avec les autres équipements utilisateurs du réseau.

L'étape de présélection 31 de stations de base comprend cinq sous-étapes 311 à 315, mises en oeuvre par l'équipement utilisateur 10.

Dans une première sous-étape 311, l'équipement utilisateur 10 reçoit un signal des stations de base accessibles 22 et 23, c'est-à-dire qu'il reçoit des signaux de référence (RS) des stations de base formant des cellules auprès desquelles il peut être rattaché. Comme indiqué dans la partie « état de la technique », lorsque l'équipement utilisateur 10 est un aéronef par exemple un avion, les communications se font dans des conditions de propagation pouvant être assimilées à une propagation en espace libre. Ainsi, un aéronef recevra de nombreux signaux de stations de base dont certaines sont potentiellement assez éloignées. Par exemple, à la Figure 2, l'équipement utilisateur 10 (avion), peut recevoir des signaux de l'ensemble des stations de base 22 à 27. L'étape de présélection 31 permet de présélectionner au moins une station de base parmi ces stations de base 22 à 27.

A chaque réception de signal, l'équipement utilisateur 10 met en oeuvre une sous-étape 312 de la méthode 31 qui est une sous-étape de mesure d'au moins une caractéristique du signal reçu. La mesure réalisée à la sous-étape 312 peut être une mesure connue telle qu'une mesure de RSRP/RSRQ comme présenté précédemment, ou toute autre mesure d'au moins une caractéristique du signal permettant d'attribuer une valeur au signal reçu. Une mesure comprend l'attribution d'une valeur associée à la station de base en fonction d'au moins une caractéristique du signal.

La sous-étape 312 de mesure comprend la création d'un rapport comprenant l'ensemble des valeurs attribuées ainsi que leurs stations de base associées. Un tel rapport peut être réalisé de manière connue, par exemple sous forme d'un tableau comprenant, à chaque ligne, une mesure de signal reçu et la station de base associée. Pour chaque mesure effectuée, l'équipement utilisateur 10 stocke ainsi par exemple dans une base de données (non représentée) la valeur associée à la station de base, la base de données contenant alors toutes les mesures que l'équipement utilisateur 10 effectue à partir de chaque cellule qu'il mesure pendant un certain temps. Chaque fois qu'une nouvelle mesure est effectuée par l'équipement utilisateur 10, cette nouvelle valeur est ajoutée à la station de base correspondante dans la base de données. Si une cellule spécifique n'a pas été mesurée précédemment (non référencée dans la base de données), une nouvelle cellule (nouvelle ligne) est déclarée dans la base de données et la valeur issue de la mesure est ajoutée à cette cellule (nouvelle colonne). Une fois que la cellule n'est plus mesurée pendant une certaine période ou au bout d'un certain nombre de mesures effectuées par l'équipement utilisateur 10, la ligne correspondant à la cellule peut être supprimée de la base de données. En sus des mesures, des informations supplémentaires peuvent être stockées dans cette base de données, telles que les antennes qui ont reçu le signal ou les coefficients d'antenne qui ont été appliqués pour obtenir le signal à des fins de mesure, les informations sur l'équipement telles que l'attitude, l'altitude, la vitesse, etc.

Dans une sous-étape 313 de la méthode 31, l'équipement utilisateur 10 réalise une présélection d'au moins une station de base parmi la pluralité de stations de base 22 à 27 en fonction d'au moins un critère relatif à l'équipement utilisateur et de la mesure réalisée à la sous-étape 312 de mesure.

Cette présélection vise à décider quelles cellules mesurées doivent être promues ou quelles cellules doivent être handicapées en fonction de plusieurs paramètres ou informations. Ces paramètres ou informations peuvent comprendre, sans être limitatifs de l'invention :

- Les mesures liées à la cellule ou à la station de base, par exemple les mesures actuelles et l'historique de mesures pour chaque cellule,

- Des informations sur l'antenne ou le groupe d'antennes et les coefficients qui ont été utilisés pour obtenir le signal de la cellule correspondante, par exemple les coefficients dans le cas d'un algorithme type MRC (« maximum-ratio combining » pour « combinaison à rapport maximal » en français) tel que présenté plus loin dans la description,

- L'attitude de l'équipement utilisateur 10, par exemple le tangage, roulis et lacet, notamment pour un aéronef,

- La vitesse de l'équipement utilisateur 10,

- L'altitude de l'équipement utilisateur 10.

L'équipement utilisateur 10 prend une décision, c'est-à-dire réalise une présélection, basée sur au moins une des informations citées précédemment, préférentiellement sur la combinaison de différents critères dérivés des informations citées précédemment. Une promotion peut être décidée pour une cellule voisine spécifique en ajoutant un décalage positif sur les valeurs de mesure stockées en base de données afin de favoriser la cellule correspondante pour le transfert, ou à l'inverse, un handicap pour une cellule spécifique peut être décidé en désignant des valeurs négatives pour cette cellule afin de réduire la probabilité que la station de base de rattachement sélectionne la cellule comme cellule cible pour un transfert intercellulaire. Une promotion ou un handicap décidé par l'équipement utilisateur 10 est considéré comme étant une présélection, c'est-à-dire qu'une station de base peut être présélectionnée pour être promue ou pour être handicapée.

Pour réaliser une présélection, l'équipement utilisateur 10 peut estimer préférentiellement les critères suivants :

- La direction de la cellule voisine,

- Le décalage Doppler en valeur absolue

- Un niveau de confiance.

Une estimation de la direction de la cellule voisine peut être dérivée de la disposition du système d'antenne, par exemple en connaissant le schéma du système d'antenne et en comparant le signal de la cellule voisine reçu par chaque élément d'antenne. Ce faisant, il est possible de savoir si l'équipement utilisateur 10 s'approche ou s'éloigne de la cellule voisine, ou encore d'estimer le signe du décalage Doppler.

Le second point est une estimation approximative de la valeur absolue du décalage Doppler. Cette valeur peut être dérivée de la force du signal reçu de la cellule voisine et en connaissant la vitesse de l'équipement utilisateur 10.

En outre, en se basant sur la disposition connue du système d'antenne, en sachant quelle antenne a reçu le signal et la vitesse de l'équipement utilisateur 10, il est possible d'estimer grossièrement l'affaiblissement entre l'équipement utilisateur 10 et la cellule voisine.

Un autre critère possible est un niveau de confiance, qui est une valeur visant à déterminer si l'équipement utilisateur 10 voit un environnement dans lequel il est confiant ou si l'environnement vers lequel il se dirige est inconnu du point de vue de l'équipement utilisateur 10. Par exemple, si l'équipement utilisateur 10 est un avion qui se déplace à grande vitesse (vitesse de croisière), à haute altitude et qu'il n'y a pas de mouvement de l'avion (tangage, roulis et variation du lacet égal à 0 ou très proche de 0), on peut supposer qu'il s'agit d'un scénario très confiant puisqu'il n'y aura pas de mouvement soudain ou de changement de trajectoire. Cependant, si l'avion se déplace à basse vitesse et à basse altitude, et change de direction (roulis différent de 0), on peut supposer que l'environnement, et donc les nouvelles cellules devant l'avion, seront très récents, et le niveau de confiance que l'avion peut avoir envers cet environnement est très faible. Ainsi, une échelle de niveau de confiance potentielle pourrait être définie comme suit (A étant le plus confiant et D le moins confiant) :

- A. Vitesse élevée, altitude élevée, pas de changement d'attitude

- B. Basse vitesse, haute altitude, pas de changement d'attitude ou Haute vitesse, basse altitude, pas de changement d'attitude

- C. Basse vitesse, basse altitude, pas de changement d'attitude

- D. Basse vitesse, basse altitude, changement d'attitude

En prenant comme exemple la figure 2, si l'avion est en vol, par exemple, on peut obtenir des mesures d'une cellule ayant les caractéristiques suivantes :

- L'intensité du signal augmente,

- Décalage Doppler élevé,

- Direction estimée conforme à la direction de la trajectoire de l'avion.

Ces caractéristiques sont représentatives d'une cellule ou d'une station de base susceptible d'être une bonne candidate pour un transfert intercellulaire.

Au contraire on peut obtenir des mesures d'une cellule présentant les caractéristiques suivantes :

- L'intensité du signal est stable ou diminue,

- Décalage Doppler moyen,

- Estimation de la direction de la cellule sur le côté ou en arrière de la trajectoire de l'équipement utilisateur 10.

Ces caractéristiques sont représentatives d'une cellule ou d'une station de base susceptible d'être une mauvaise candidate pour un transfert intercellulaire et ne sera donc pas présélectionnée ou sera présélectionnée pour être « handicapée ».

Par conséquent, l'algorithme de promotion favorisera les cellules dont le signal est plus fort lorsqu'il provient de l'avant de l'équipement utilisateur 10 dans le cas d'un avion (voir par exemple cellule n°22 de la figure 2) par rapport à celles dont le signal provient du côté de l'avion (cellules n°23, 24, 25, 26, 27 de la figure 2).

Dans une sous-étape suivante 314, l'équipement utilisateur 10 modifie au moins une valeur du rapport créé à la sous-étape 312 de mesure en fonction de la présélection, la valeur modifiée étant associée à au moins une station de base présélectionnée. Cette modification peut par exemple consister en un rehaussement de la valeur mesurée pour une cellule présélectionnée pour être promue, et en une diminution de la valeur mesurée pour une cellule non présélectionnée ou présélectionnée pour être handicapée. Le rehaussement et la diminution de valeur sont réalisés à partir de valeurs prédéterminées ajoutées ou soustraites aux valeurs stockées en base de données pour les différentes cellules avant envoi à la station de base de rattachement de l'équipement utilisateur 10. Par exemple, en reprenant les exemples précédents, les valeurs de mesure pour la cellule 22 seront réhaussées et les valeurs de mesure pour les cellules 23 à 27 seront diminuées, afin de favoriser (« promouvoir ») la cellule 22 auprès de la station de base de rattachement 21 et de défavoriser (« handicaper ») les cellules 23 à 27 auprès de la station de base de rattachement 21.

Les valeurs de mesure rapportées, même modifiées, doivent préférentiellement rester entre les plages autorisées. Par exemple, les valeurs RSRP sont définies dans la spécification 38.133 du 3GPP, et selon qu'elles sont de niveau 1 ou de niveau 3, ces mesures pourraient varier de -140 à -40dBm et de -156 dBm à - 31 dBm respectivement, les deux avec une résolution de 1dB. Une valeur de RSRP après modification doit donc rester dans ces bornes.

Un exemple de modification de valeurs est décrit par la suite.

Les valeurs de RSRP et RSRQ comprises dans le rapport envoyé par la suite à la station de base de rattachement peuvent être écrites comme suit :

-

$$RSRP_{reported}(cell_i) = RSRP_{measured}(cell_i) + P_{Offset_i}$$

-

$$RSRQ_{reported}(cell_i) = RSRQ_{measured}(cell_i) + Q_{Offset_i}$$

avec l'indice « reported » pour les mesures modifiées, « measured » pour les valeurs mesurées, et « offset » pour les valeurs prédéterminées ajoutées ou soustraites permettant de promouvoir ou handicaper la cellule.

La quantité ajoutée, c'est-à-dire la valeur prédéterminée, de signe positif ou négatif, pour une mesure RSRP peut par exemple être :

$$P_{offset_i} = \left[ f_{Doppler}(\Delta f_{Doppler_i}) + f_{Antenna}(i) + f_{Power\ Gradient}(\Delta RSRP_i) \right]$$
$$\cdot f_{Plane}(attitude, speed, altitude)$$

Avec $f_{Doppler}$ une fonction qui promeut, c'est-à-dire qui augmente la valeur, quand le décalage Doppler est élevé et positif et qui handicape, c'est-à-dire qui baisse la valeur quand le décalage Doppler est élevé et négatif.

Une mise en oeuvre simple de $f_{Doppler}$ peut par exemple être :

$$f_{Doppler}(\Delta f_{Doppler_i}) = 3dB \cdot \frac{\Delta f_{Doppler_i}}{Doppler_{Max}}$$

Avec $Doppler_{Max}$ le maximum du décalage Doppler, $\Delta f_{Doppler_i}$ le décalage Doppler pour la signal reçu de la cellule i.

Dans la formule de $P_{offset_i}$, $f_{Antenna}$ est une fonction qui promeut la cellule dans le rapport de mesures quand le signal reçu par l'équipement utilisateur 10 est reçu au niveau de l'antenne pointant dans la direction de déplacement de l'équipement utilisateur 10. Par exemple, pour une antenne avec quatre éléments rayonnants et l'antenne 0 pointant vers l'avant, et $\alpha_{i,0}...\alpha_{i,3}$ le poids obtenu par un algorithme MRC pour maximiser le rapport signal/bruit du signal reçu de la cellule i, on peut avoir :

$$f_{antenna}(i) = 20\,log_{10}\left( \frac{\sqrt{2}\|\alpha_{i,0}\| + \|\alpha_{i,1}\| + \|\alpha_{i,2}\| + \|\alpha_{i,3}\|}{\sqrt{\|\alpha_{i,0}\|^2 + \|\alpha_{i,1}\|^2 + \|\alpha_{i,2}\|^2 + \|\alpha_{i,3}\|^2}} \right)$$

Toujours dans la formule de $P_{offset_i}$, $f_{Power\ Gradient}$ est une fonction qui promeut la cellule si la puissance du signal reçu de cette cellule augmente. Par exemple, une implémentation simple consisterait à ajouter 3dB au rapport si la puissance reçue a augmenté par rapport aux mesures précédentes de la façon suivante:

$$f_{Power\ Gradient}(\Delta RSRP_i) = 3\,dB \cdot \left[ \frac{sign(RSRP_i(t_0) - RSRP_i(t_0 - 1)) + 1}{2} \right]$$

Toujours dans la formule de $P_{offset_i}$, $f_{Plane}$ est une fonction qui définit un facteur permettant d'améliorer ou de modérer (et éventuellement de mettre à zéro) les valeurs de décalage décrites ci-dessus en prenant en compte l'attitude (tangage, roulis), l'altitude et la vitesse de l'équipement utilisateur 10. Par exemple, une version simple pourrait être $f_{Plane} = 0$ lorsque l'équipement utilisateur 10 est à une altitude inférieure à 3500 pieds et que la vitesse de l'équipement utilisateur 10 est inférieure à 400 km/h. Dans les autres cas la fonction $f_{plane}$ pourrait suivre une fonction comme : *si -$pitch_{max} \leq pitch \leq pitch_{max}$ et - $roll_{max} \leq roll \leq roll_{max}$:*

$$f_{Plane} = \frac{\alpha \cdot \left(\frac{speed}{speed_{max}}\right) + \beta \cdot \left(\frac{altitude}{altitude_{max}}\right) + \gamma \cdot \left(\frac{A \cdot \frac{|pitch| - pitch_{max}}{pitch_{max}} + B \cdot \frac{|roll| - roll_{max}}{roll_{max}}}{A + B}\right)}{\alpha + \beta + \gamma}$$

*sinon*

$$f_{Plane} = 0$$

Où les coefficients $\alpha, \beta, \gamma, A, B \in \mathbb{R} \, [0..1]$ et $pitch_{max}, roll_{max} \in \mathbb{R} \, [0..90°]$ permettent d'ajuster le niveau de confiance en fonction d'un scénario spécifique, « pitch » étant « tangage » en français, « roll » étant « roulis » en français et « speed » étant « vitesse » en français.

La même approche peut être appliquée pour le calcul de $Q_{offset_i}$.

Une fois que les valeurs d'ajout ou de soustraction ont été calculées, elles sont ajoutées ou retirées des valeurs de mesure dans la base de données où les valeurs de mesure sont stockées et/ou dans le rapport créé à l'étape 312.

Dans une sous-étape 315, le rapport comprenant les valeurs mesurées et les valeurs modifiées est envoyé par l'équipement utilisateur 10 à la station de base de rattachement 21. Le rapport comprend les valeurs associées aux cellules pour lesquelles la station de base de rattachement 21 a demandé des informations.

La méthode d'optimisation du transfert intercellulaire 30 comprend en outre quatre étapes 32 à 35 mises en oeuvre par la station de base de rattachement 21 représentées à la Figure 3.

Dans une étape 32, la station de base de rattachement 21 reçoit le rapport.

Dans une étape 33, la station de base de rattachement 21 sélectionne une station de base à partir du rapport reçu par la station de base de rattachement 21. Cette sélection est réalisée classiquement à partir notamment des valeurs de mesures comprises dans le rapport. Les valeurs de mesure prises en compte sont alors soit des valeurs de mesures authentiques, c'est-à-dire réellement mesurées, soit des valeurs de mesures modifiées à la sous-étape 314 de l'étape 31 par l'équipement utilisateur 10 qui a pris la décision de promouvoir ou d'handicaper certaines stations de base du rapport.

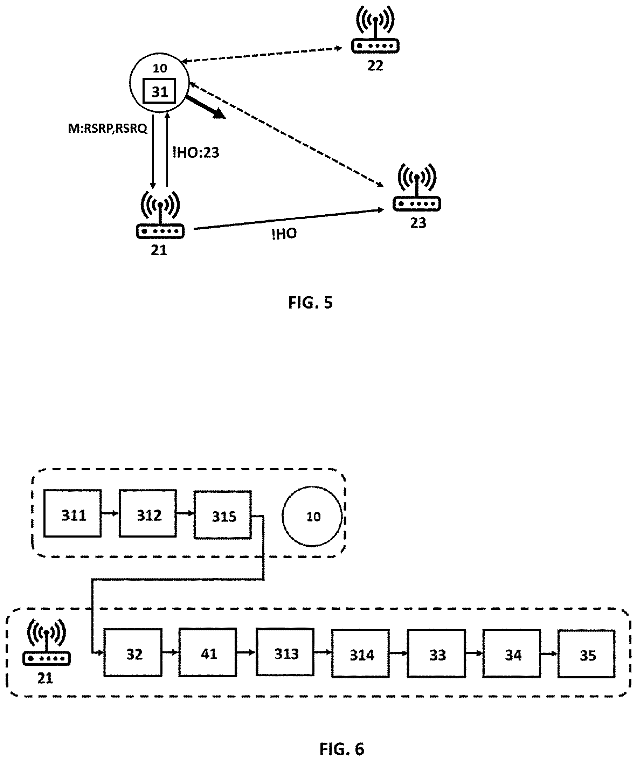

Dans des étapes 34 et 35, et comme représenté à la Figure 5, la station de base de rattachement 21 initie le transfert intercellulaire en envoyant, à l'étape 34, une communication « !HO » pour que la station de base 23 puisse préparer les ressources nécessaires au transfert intercellulaire puis envoie, à l'étape 35, une communication à l'équipement utilisateur 10 « !HO:23 », l'informant de ce changement de station de base de rattachement.

Dans un mode de réalisation alternatif, la méthode de présélection 31 peut être mise en oeuvre par un autre dispositif du réseau que l'équipement utilisateur 10, par exemple par la station de base de rattachement 21. Pour cela, l'équipement utilisateur 10 transmet à la station de base de rattachement 21 des informations, par exemple d'altitude, d'attitude, de vitesse et concernant sa ou ses antennes, afin que la station de base de rattachement puisse mettre en oeuvre les étapes de pré-sélection 313 et de modification 314 de la ou des valeurs de mesure, les mesures ayant été réalisées par l'équipement utilisateur 10. Cette alternative est représentée à la Figure 6.

Comme décrit à la Figure 6, dans ce mode de réalisation alternatif, l'équipement utilisateur 10 met toujours en oeuvre les étapes de réception 311 de signaux de stations de base 22 à 27 et de mesure 312 d'au moins une caractéristique des ces signaux et de création de rapport, ainsi que l'étape 315 d'envoi du rapport à la station de base de rattachement 21. L'équipement utilisateur 10 transmet aussi des informations sur lesquelles sont basés les critères relatif à l'équipement utilisateur 10 utilisés pour la présélection 313. Ces informations sont par exemple des informations de l'équipement utilisateur 10 relatives à son altitude, son attitude, sa vitesse et concernant sa ou ses antennes.

La station de base de rattachement 21 met toujours en oeuvre les étapes 32 et 33 à 35 déjà décrites précédemment, c'est-à-dire la réception du rapport 32, la sélection 33 d'une future station de base de rattachement et l'initiation du transfert intercellulaire 34 et 35.

Dans ce mode de réalisation alternatif, la station de base de rattachement met aussi en oeuvre une étape 41 de réception des informations de l'équipement utilisateur 10, ces informations étant utilisées par la suite pour les critères de présélection.

Enfin, la station de base de rattachement 21 met en oeuvre les étapes de présélection 313 d'au moins une station de base et de modification 314 des valeurs de mesure pour cette station de base présélectionnée, avant de mettre en oeuvre les étapes suivantes 33 à 35. Ainsi, les étapes 41 et 313 à 314 sont intercalées entre les étapes de réception du rapport 32 et de sélection d'une station de base pour réaliser un transfert intercellulaire 33. La station de base réalise les étapes 313 et 314 de présélection et de modification de valeur en se basant les informations sur l'équipement utilisateur 10 reçues à l'étape 41 et sur les valeurs de mesures du rapport reçu à l'étape 32.

**Revendications**

1. Méthode de pré-sélection (31) d'au moins une station de base (23) parmi une pluralité de stations de base (21,22,23), un équipement utilisateur (10) et la pluralité de stations de base (21,22,23) étant compris dans un réseau mobile, l'équipement utilisateur (10) étant un aéronef et étant attaché à une station de base de rattachement (21) de la pluralité de stations de base (21,22,23), chaque station de base (21,22,23) formant une cellule du réseau mobile, la méthode (31) comprenant les étapes de :

   - Réception (311), par l'équipement utilisateur (10), d'un signal de chaque station de base de la pluralité de stations de base (21,22,23),
   - Mesure (312), par l'équipement utilisateur (10), d'au moins une caractéristique de chaque signal reçu de la pluralité de stations de base (21,22,23), la mesure comprenant l'attribution d'au moins une valeur associée à chaque station de base (21,22,23) en fonction de la au moins une caractéristique de chaque signal et la création d'un rapport comprenant l'ensemble des valeurs attribuées,
   - Pré-sélection (313) d'au moins une station de base (23) parmi la pluralité de stations de base (21,22,23) en fonction d'au moins un critère relatif à l'équipement utilisateur (10) et de la mesure réalisée à l'étape de mesure (312),
   - Modification (314) d'au moins une valeur du rapport créé à l'étape de mesure (312), la au moins une valeur modifiée étant associée à la au moins une station de base présélectionnée (23) ;

   la méthode étant **caractérisée en ce que** le au moins un critère relatif à l'équipement utilisateur (10) prend en compte au moins une des informations sur l'équipement utilisateur (10) parmi :

   - le tangage de l'équipement utilisateur (10),
   - le roulis de l'équipement utilisateur (10),
   - le lacet de l'équipement utilisateur (10).

2. Méthode de pré-sélection (31) selon la revendication précédente **caractérisée en ce qu'**à l'étape de modification (314) d'au moins une valeur du rapport, la au moins une valeur est modifiée par l'ajout ou la soustraction d'une valeur prédéterminée.

3. Méthode de pré-sélection (31) selon la revendication précédente **caractérisée en ce que** la valeur prédéterminée est ajoutée ou soustraite à la au moins une valeur du rapport si la station de base (21,22,23) associée à la valeur appartient à la au moins une station de base présélectionnée (23).

4. Méthode de pré-sélection (31) selon la revendication 2 ou 3 **caractérisée en ce que** la valeur prédéterminée est prédéterminée en fonction de la au moins une information prise en compte.

5. Méthode de pré-sélection (31) selon l'une quelconque des revendications précédentes **caractérisée en ce que** le au moins un critère est choisi parmi :

   - la direction de la cellule de chaque station de base (21,22,23), déterminée à partir de la disposition des antennes de l'équipement utilisateur (10) et de la valeur de la caractéristique mesurée de chaque signal reçu,
   - un niveau de confiance de l'équipement utilisateur (10) dans l'environnement vers lequel il se dirige, déterminée à partir du tangage, du roulis et du lacet de l'équipement utilisateur (10).

**6.** Méthode de pré-sélection (31) selon l'une quelconque des revendications précédentes **caractérisée en ce que** les étapes de pré-sélection (313) et de modification (314) sont mises en oeuvre par l'équipement utilisateur (10) et **en ce que** la méthode de pré-sélection (31) comprend en outre une étape d'envoi (315) du rapport à la station de base de rattachement (21).

**7.** Méthode de pré-sélection (31) selon l'une quelconque des revendications 1 à 5 **caractérisée en ce que** les étapes de pré-sélection (313) et de modification (314) sont mises en oeuvre par la station de base de rattachement (21) et **en ce que** la méthode de pré-sélection (31) comprend en outre, avant les étapes de pré-sélection (313) et de modification (314), une étape de réception (32), par la station de base de rattachement (21), du rapport.

**8.** Méthode de pré-sélection (31) selon la revendication précédente **caractérisée en ce qu'**elle comprend en outre, avant les étapes de pré-sélection (313) et de modification (314), une étape de réception (41), par la station de base de rattachement (21), d'au moins une des informations sur l'équipement utilisateur (10).

**9.** Système comprenant :

- Au moins un équipement utilisateur (10) configuré pour mettre en oeuvre la méthode de pré-sélection selon la revendication 6, l'équipement utilisateur (10) étant un aéronef ;
- Une pluralité de stations de base (21,22,23) comprenant au moins une station de base de rattachement (21) à laquelle l'équipement utilisateur (10) est rattaché.

**10.** Système comprenant :

- Au moins un équipement utilisateur (10), l'équipement utilisateur (10) étant un aéronef ;
- Une pluralité de stations de base (21,22,23) comprenant au moins une station de base de rattachement (21) à laquelle l'équipement utilisateur (10) est rattaché, la au moins une station de base étant configurée pour mettre en oeuvre la méthode de pré-sélection (31) selon l'une quelconque des revendications 7 ou 8.

**11.** Produit-programme d'ordinateur comprenant des instructions qui, lorsque le programme est exécuté par un ordinateur, conduisent celui-ci à mettre en oeuvre les étapes de la méthode de pré-sélection (31) selon l'une quelconque des revendication 1 à 8.

**12.** Support d'enregistrement lisible par ordinateur comprenant des instructions qui, lorsqu'elles sont exécutées par un ordinateur, conduisent celui-ci à mettre en oeuvre les étapes de la méthode de pré-sélection (31) selon l'une quelconque des revendication 1 à 8.

**Patentansprüche**

**1.** Verfahren zur Vorauswahl (31) von mindestens einer Basisstation (23) aus einer Vielzahl von Basisstationen (21,22,23), wobei ein Benutzergerät (10) und die Vielzahl von Basisstationen (21,22,23) in einem Mobilfunknetz enthalten sind, wobei das Benutzergerät (10) ein Flugzeug ist und mit einer zugehörigen Basisstation (21) der Vielzahl von Basisstationen (21,22,23) verbunden ist, wobei jede Basisstation (21,22,23) eine Zelle des Mobilfunknetzes bildet, wobei das Verfahren (31) die folgenden Schritte umfasst:

- Empfangen (311) durch das Benutzergerät (10) eines Signals von jeder der Vielzahl von Basisstationen (21, 22, 23),
- Messen (312) durch das Benutzergerät (10) von mindestens einem Merkmal jedes Signals, das von der Vielzahl von Basisstationen (21, 22, 23) empfangen wird, wobei das Messen das Zuweisen von mindestens einem Wert, der jeder Basisstation (21, 22, 23) zugeordnet ist, in Abhängigkeit des mindestens einen Merkmals jedes Signals und das Erzeugen eines Berichts, der alle zugeordneten Werte umfasst, einschließt,
- Vorauswahl (313) mindestens einer Basisstation (23) aus der Vielzahl von Basisstationen (21, 22, 23) in Abhängigkeit von mindestens einem Kriterium, das sich auf das Benutzergerät (10) bezieht, und der in dem Messschritt (312) durchgeführten Messung,
- Ändern (314) mindestens eines Wertes des im Messschritt (312) erstellten Berichts, wobei der mindestens eine geänderte Wert mit der mindestens einen vorausgewählten Basisstation (23) verknüpft ist;
wobei das Verfahren **dadurch gekennzeichnet ist, dass**
das mindestens eine Kriterium in Bezug auf das Benutzergerät (10) mindestens eine der folgenden Informationen über das Benutzergerät (10) berücksichtigt:

- das Nicken des Benutzergeräts (10),
- das Rollen des Benutzergeräts (10),
- das Gieren des Benutzergeräts (10).

2. Vorauswahlverfahren (31) nach dem vorhergehenden Anspruch, **dadurch gekennzeichnet, dass** bei dem Schritt des Änderns (314) mindestens eines Wertes des Verhältnisses der mindestens eine Wert durch Addieren oder Subtrahieren eines vorbestimmten Wertes geändert wird.

3. Vorauswahlverfahren (31) nach dem vorhergehenden Anspruch, **dadurch gekennzeichnet, dass** der vorbestimmte Wert zu dem mindestens einen Wert des Verhältnisses addiert oder davon subtrahiert wird, wenn die Basisstation (21, 22, 23), die mit dem Wert verbunden ist, zu der mindestens einen vorausgewählten Basisstation (23) gehört.

4. Vorauswahlverfahren (31) nach Anspruch 2 oder 3, **dadurch gekennzeichnet, dass** der vorbestimmte Wert in Abhängigkeit von der mindestens einen berücksichtigten Information vorbestimmt wird.

5. Vorauswahlverfahren (31) nach einem der vorhergehenden Ansprüche, **dadurch gekennzeichnet, dass** das mindestens eine Kriterium ausgewählt wird aus:

- der Richtung der Zelle jeder Basisstation (21, 22, 23), die aus der Anordnung der Antennen des Benutzergeräts (10) und dem Wert des gemessenen Merkmals jedes empfangenen Signals bestimmt wird,
- einem Vertrauenslevel des Benutzergeräts (10) in die Umgebung, auf die es sich zubewegt, das aus der Nick-, Roll- und Gierbewegung des Benutzergeräts (10) bestimmt wird.

6. Vorauswahlverfahren (31) nach einem der vorhergehenden Ansprüche, **dadurch gekennzeichnet, dass** die Schritte der Vorauswahl (313) und der Änderung (314) durch das Benutzergerät (10) implementiert werden und dass das Vorauswahlverfahren (31) außerdem einen Schritt des Sendens (315) des Berichts an die zugehörige Basisstation (21) umfasst.

7. Vorauswahlverfahren (31) nach einem der Ansprüche 1 bis 5, **dadurch gekennzeichnet, dass** die Vorauswahl- (313) und Änderungsschritte (314) von der zugehörigen Basisstation (21) durchgeführt werden und dass das Vorauswahlverfahren (31) vor den Vorauswahl- (313) und Änderungsschritten (314) außerdem einen Schritt des Empfangens (32) durch die zugehörige Basisstation (21) des Berichts umfasst.

8. Vorauswahlverfahren (31) nach dem vorhergehenden Anspruch, **dadurch gekennzeichnet, dass** es vor den Schritten der Vorauswahl (313) und der Änderung (314) außerdem einen Schritt des Empfangens (41) mindestens einer der Informationen über das Benutzergerät (10) durch die zugehörige Basisstation (21) umfasst.

9. System bestehend aus:

- mindestens einem Benutzergerät (10), das so ausgelegt ist, dass es die Vorauswahlmethode nach Anspruch 6 implementiert, wobei das Benutzergerät (10) ein Luftfahrzeug ist;
- einer Vielzahl von Basisstationen (21,22,23) mit mindestens einer zugehörigen Basisstation (21), mit der das Benutzergerät (10) verbunden ist.

10. System bestehend aus:

- mindestens einem Benutzergerät (10), wobei das Benutzergerät (10) ein Luftfahrzeug ist;
- einer Vielzahl von Basisstationen (21, 22, 23), die mindestens eine zugehörige Basisstation (21) umfassen, mit der das Benutzergerät (10) verbunden ist, wobei die mindestens eine Basisstation ausgelegt ist, um das Vorauswahlverfahren (31) nach einem der Ansprüche 7 oder 8 auszuführen.

11. Computerprogrammprodukt mit Anweisungen, die, wenn das Programm von einem Computer ausgeführt wird, diesen dazu veranlassen, die Schritte des Vorauswahlverfahrens (31) nach einem der Ansprüche 1 bis 8 auszuführen.

12. Computerlesbares Aufzeichnungsmedium, das Anweisungen enthält, die, wenn sie von einem Computer ausgeführt werden, diesen dazu veranlassen, die Schritte des Vorauswahlverfahrens (31) nach einem der Ansprüche 1 bis 8 auszuführen.

**Claims**

1. A method for preselecting (31) at least one base station (23) from a plurality of base stations (21, 22, 23), a user equipment (10) and the plurality of base stations (21, 22, 23) being included in a mobile network, the user equipment (10) being an aircraft and being attached to an attachment base station (21) of the plurality of base stations (21,22,23), each base station (21,22,23) forming a cell of the mobile network, the method (31) comprising the steps of:

   - receiving (311), by the user equipment (10), a signal from each base station of the plurality of base stations (21,22,23),
   - measuring (312), by the user equipment (10), at least one characteristic of each signal received from the plurality of base stations (21,22,23), measuring comprising assigning at least one value associated with each base station (21,22,23) according to the at least one characteristic of each signal and creating a report comprising all the assigned values,
   - preselecting (313) at least one base station (23) from the plurality of base stations (21, 22, 23) according to at least one criterion relating to the user equipment (10) and the measurement carried out in the measurement step (312),
   - modifying (314) at least one value of the report created in the measurement step (312), the at least one modified value being associated with the at least one preselected base station (23);

   the method being **characterized in that** the at least one criterion relating to the user equipment (10) takes into account at least one of the information on the user equipment (10) among:

   - the pitch of the user equipment (10),
   - the roll of the user equipment (10),
   - the yaw of the user equipment (10).

2. The preselection method (31) according to the preceding claim, **characterised in that** in the step of modifying (314) at least one value of the report, the at least one value is modified by adding or subtracting a predetermined value.

3. The preselection method (31) according to the preceding claim, **characterised in that** the predetermined value is added to or subtracted from the at least one value of the report if the base station (21 ,22,23) associated with the value belongs to the at least one preselected base station (23).

4. The preselection method (31) according to claim 2 or 3, **characterised in that** the predetermined value is predetermined according to the at least one piece of information taken into account.

5. The preselection method (31) according to any of the preceding claims, **characterised in that** the at least one criterion is chosen from:

   - the direction of the cell of each base station (21,22,23), determined from the arrangement of the antennas of the user equipment (10) and the value of the measured characteristic of each received signal,
   - a confidence level of the user equipment (10) in the environment it is moving towards, determined from the pitch, roll and yaw of the user equipment (10).

6. The preselection method (31) according to any of the preceding claims, **characterised in that** the preselection (313) and modification (314) steps are implemented by the user equipment (10) and **in that** the preselection method (31) further comprises a step of sending (315) the report to the attachment base station (21).

7. The preselection method (31) according to any of claims 1 to 5, **characterised in that** the preselection (313) and modification (314) steps are implemented by the attachment base station (21) and **in that** the preselection method (31) further comprises, prior to the preselection (313) and modification (314) steps, a step of receiving (32) the report by the attachment base station (21).

8. The preselection method (31) according to the preceding claim, **characterised in that** it further comprises, prior to the preselection (313) and modification (314) steps, a step of receiving (41) at least one of the information on the user equipment (10) by the attachment base station (21).

9. A system comprising:

- at least one piece of user equipment (10) configured to implement the preselection method according to claim 6, the user equipment (10) being an aircraft;
- a plurality of base stations (21,22,23) comprising at least one attachment base station (21) to which the user equipment (10) is attached.

10. A system comprising:

- At least one piece of user equipment (10), the user equipment (10) being an aircraft;
- A plurality of base stations (21,22,23) comprising at least one attachment base station (21) to which the user equipment (10) is attached, the at least one base station being configured to implement the preselection method (31) according to any of claims 7 or 8.

11. A computer program product comprising instructions which, when the program is executed by a computer, cause the same to implement the steps of the preselection method (31) according to any of claims 1 to 8.

12. A computer-readable recording medium comprising instructions which, when executed by a computer, cause the same to implement the steps of the preselection method (31) according to any of claims 1 to 8.

FIG. 1

FIG. 2

30

```
┌──────┐   ┌──────┐   ┌──────┐   ┌──────┐   ┌──────┐
│  31  │──→│  32  │──→│  33  │──→│  34  │──→│  35  │
└──────┘   └──────┘   └──────┘   └──────┘   └──────┘
```

**FIG. 3**

```
┌─────────────────────────────────────────────────────────────────┐
│  ┌──────┐   ┌──────┐   ┌──────┐   ┌──────┐   ┌──────┐            │
│  │ 311  │──→│ 312  │──→│ 313  │──→│ 314  │──→│ 315  │──────────→ │
│  └──────┘   └──────┘   └──────┘   └──────┘   └──────┘            │
│                              31                                   │
└─────────────────────────────────────────────────────────────────┘
```

**FIG. 4**

**FIG. 5**

**FIG. 6**

## RÉFÉRENCES CITÉES DANS LA DESCRIPTION

**Documents brevets cités dans la description**

- EP 3110203 A1

- US 2019306768 A1